# FASCICULE DE BREVET EUROPEEN

(11) **EP 4 483 044 B1**
(45) Date de publication et mention de la délivrance du brevet: **05.11.2025**
(21) Numéro de dépôt: 23709242.4
(22) Date de dépôt: 13.02.2023
(51) Int. Cl.: F01D 11/00

(54) **ASSEMBLAGE POUR UNE TURBOMACHINE D'AÉRONEF ET TURBOMACHINE D'AÉRONEF**
ANORDNUNG FÜR EIN FLUGZEUGTURBINENTRIEBWERK UND FLUGZEUGTURBINENTRIEBWERK
ASSEMBLY FOR AN AIRCRAFT TURBOMACHINE AND AIRCRAFT TURBOMACHINE

(30) Priorité: 21.02.2022 FR 2201514
(43) Date de publication de la demande: 01.01.2025
(73) Titulaire: Safran Ceramics, 33185 Le Haillan (FR)
(72) Inventeur: LACOMBE, Benjamin, 77550 MOISSY-CRAMAYEL (FR); CARLIN, Maxime François Roger, 77550 MOISSY-CRAMAYEL (FR)
(74) Mandataire: Gevers & Orès
(86) Numéro de dépôt international: PCT/FR2023/050185
(87) Numéro de publication internationale: WO 2023/156726

(56) Documents cités:
- EP-A1- 3 095 961
- EP-A1- 3 109 043
- EP-A1- 3 663 528
- US-A1- 2018 371 947

## Description

### Domaine technique de l'invention

La présente invention concerne un assemblage pour une turbomachine d'aéronef, ainsi qu'une turbomachine d'aéronef comportant cet assemblage.

### Aval-plan technique

L'état de l'art comprend notamment les documents FR-A1-3 070 715, FR-A1-3 072 825, FR-A1-3 103 012, EP-A1-3 109 043, EP-A1-3 095 961, US- A1-2018/371947 et EP-A1-3 663 528.

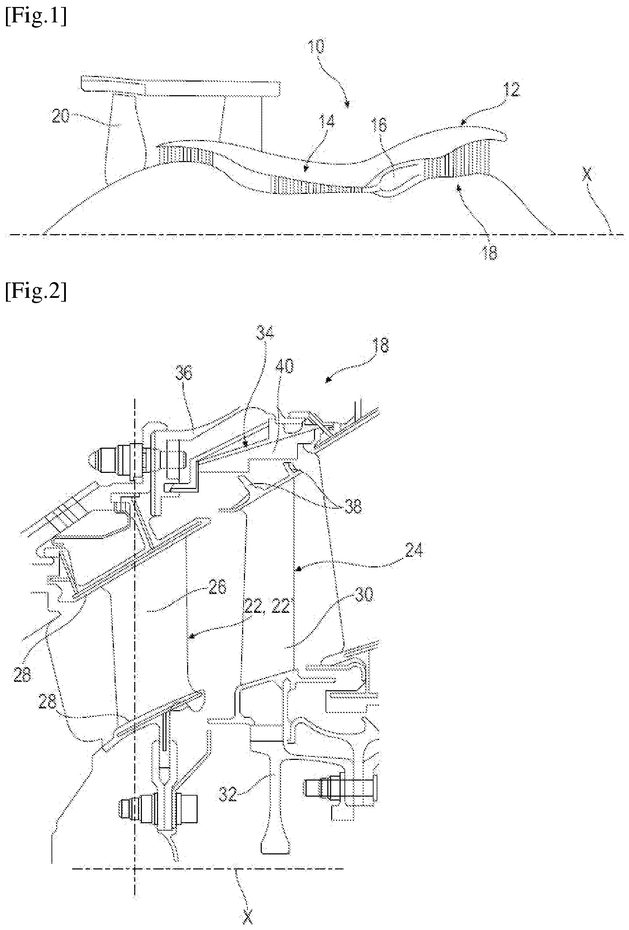

Une turbomachine, telle qu'illustrée à la figure 1, comprend en général un générateur de gaz 12 comportant, d'amont en aval par référence à la direction d'écoulement des gaz, au moins un compresseur 14, une chambre annulaire de combustion 16 et au moins une turbine 18. Un flux d'air pénètre dans le générateur de gaz 12 et est comprimé dans les compresseurs 14. L'air comprimé est mélangé à du carburant et brûlé dans la chambre de combustion 16. Les gaz de combustion sortant de la chambre 16 sont détendus dans les turbines 18, ce qui entraîne les rotors des turbines 18 ainsi que les rotors des compresseurs 14 et d'une hélice, appelée soufflante 20, située en amont du générateur de gaz 12.

Comme illustré à la figure 2, un compresseur 14 ou une turbine 18 comprend en général plusieurs étages (de compression pour un compresseur et de détente pour une turbine) comprenant chacun un aubage de stator 22 et un aubage de rotor 24.

L'aubage de stator 22 comprend une rangée annulaire d'aubes ou de pales 26 fixes et est appelé redresseur dans le cas d'un compresseur 14 et distributeur 22' dans le cas d'une turbine 18. Les pales 26 s'étendent entre deux plateformes annulaires 28 coaxiales, qui s'étendent autour de l'axe longitudinal X de la turbomachine, qui est l'axe de rotation de ses rotors.

L'aubage de rotor 24 comprend également une rangée annulaire d'aubes 30 portées par un disque 32. L'aubage de rotor tourne à l'intérieur d'un anneau d'étanchéité 34 porté par un carter 36. L'aubage de rotor 24 comprend par exemple à sa périphérie externe des léchettes annulaires 38 qui peuvent coopérer par frottement avec un revêtement abradable 40 situé à la périphérie interne de l'anneau d'étanchéité 34, pour assurer une étanchéité axiale entre l'aubage de rotor 24 et l'anneau 34 en fonctionnement.

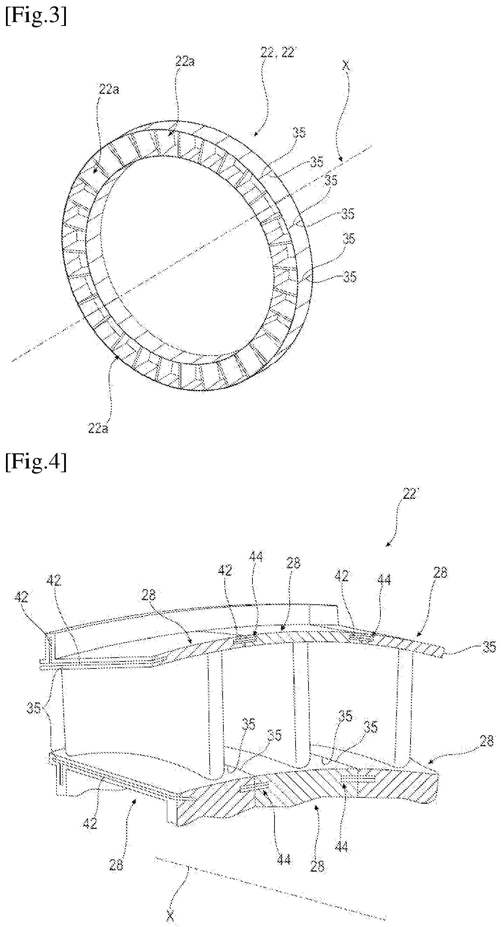

Il est connu de sectoriser un distributeur 22' ou un anneau d'étanchéité 34. Le distributeur 22' ou l'anneau 34 comprend alors plusieurs secteurs à orientation circonférentielle qui sont disposés les uns à côté des autres autour de l'axe X (cf. figure 3).

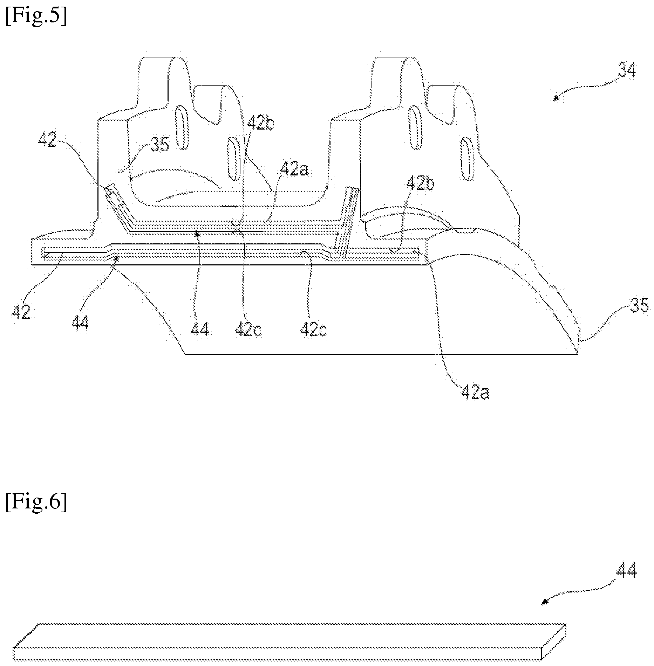

Il est important d'assurer une étanchéité entre les secteurs en fonctionnement, pour éviter des fuites de gaz en dehors de la veine d'écoulement des gaz. Pour cela, les bords latéraux 35 des secteurs qui sont en regard les uns des autres sont pourvus de fentes 42 de logement de languettes d'étanchéité 44 (cf. figures 4 et 5).

La figure 4 montre l'étanchéité réalisée entre les bords latéraux 35 en regard des secteurs des plateformes 28 du distributeur 22', grâce au montage de languettes 44 dans les fentes 42 de ces bords.

La figure 5 montre l'étanchéité réalisée entre les bords latéraux 35 en regard des secteurs d'anneau 34, grâce au montage de languettes 44 dans les fentes 42 de ces bords.

Chacun des bords 35 peut comprendre une ou plusieurs fentes 42 d'engagement d'une ou plusieurs languettes 44.

Chacune de ces languettes 44 a une forme générale allongée et comprend deux bords longitudinaux opposés engagés respectivement dans les fentes 42 de deux bords latéraux 35 en regard de deux secteurs adjacents. On comprend donc que les languettes 44 sont réparties autour de l'axe X du distributeur 22' ou de l'anneau 34 et sont montées entre les secteurs du distributeur 22' ou de l'anneau 34.

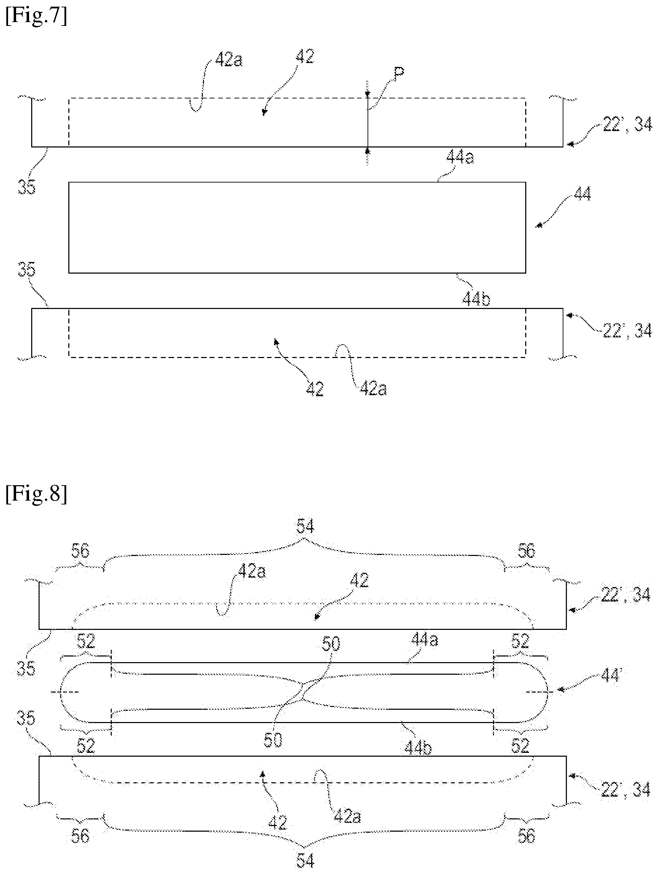

Il est connu de réaliser un distributeur 22' et un anneau 34 en alliage métallique. Dans ce cas, les languettes 44 sont également réalisées en alliage métallique. Les fentes 42 sont en général réalisées par usinage des bords latéraux 35 des secteurs. C'est par exemple la technologie EDM (acronyme de l'anglais *Electro Discharge Machining*) qui est utilisée pour réaliser cet usinage. Les languettes 44 ont une forme générale plate et parallélépipédique (cf. figure 6) et les fentes 42 de réception des bords longitudinaux 44a, 44b de ces languettes 44 ont des formes générales complémentaires (cf. figure 7). Les fentes 42 ont en particulier une profondeur P constante, c'est-à-dire que le fond 42a de chaque fente 42 est plan. Cette profondeur est ici mesurée dans une direction qui est tangente à une circonférence centrée sur l'axe X et qui est contenue dans un plan perpendiculaire à l'axe X. Autrement dit, les extrémités longitudinales de chaque fente 42 sont en angle droit. Le fond 42a de chaque fente est situé entre deux parois 42b, 42c de la fente 42, qui s'étendent parallèlement au plan général de la languette 44 destinée à être engagée dans la fente 42 (cf. figure 5).

Il est également connu de réaliser un distributeur 22' et un anneau 34 en matériau composite à matrice céramique (CMC). Les matériaux CMC présentent de bonnes propriétés mécaniques les rendant aptes à constituer des éléments de structure et conservent avantageusement ces propriétés à températures élevées. En effet, la contrainte majeure des turbomachines est la tenue aux températures élevées. Ainsi, un assemblage en matériau CMC a une bonne capacité de résistance aux températures élevées, ce qui améliore le rendement global de la turbomachine. Par ailleurs, un tel assemblage réduit la masse de la turbomachine et donc sa consommation de carburant.

L'usinage EDM n'est pas adapté pour réaliser des fentes dans un secteur en matériau CMC. En effet, l'utilisation de la technologie EDM génère des problèmes d'étincelage lors de l'usinage lié à l'hétérogénéité du matériau, qui se traduisent par une dégradation de la zone usée et des états de surface dégradés dans cette zone. L'usinage de la fente par un outil d'usinage est envisageable mais est trop onéreuse car elle consomme un trop grand nombre d'outils qui se rompent rapidement et qui peuvent générer des défauts de surface lors de cette rupture entraînant la mise au rebut du secteur.

Il existe donc un besoin d'améliorer la réalisation des fentes de réception de languettes d'étanchéité sur des secteurs en CMC, de façon à réduire la durée de cette opération ainsi que son coût.

La présente invention propose un perfectionnement qui apporte une solution simple, efficace et économique à ce besoin.

### Résumé de l'invention

L'invention concerne un assemblage pour une turbomachine d'aéronef, cet assemblage ayant une forme générale annulaire autour d'un axe et comportant plusieurs secteurs disposés circonférentiellement les uns à côté des autres autour de l'axe, ces secteurs étant réalisés en matériau composite à matrice céramique et comportant chacun des bords latéraux qui sont situés en regard de bords latéraux de secteurs adjacents, l'assemblage comportant en outre plusieurs languettes d'étanchéité qui sont réparties autour de l'axe et montées entre les secteurs, chacune de ces languettes ayant une forme générale allongée et comportant un premier bord longitudinal engagé dans une fente d'un bord latéral d'un des secteurs, et un second bord longitudinal, opposé au premier bord, et engagé dans une fente d'un bord latéral en regard d'un secteur adjacent, caractérisé en ce que chacun des premiers et seconds bords comprend une portion intermédiaire rectiligne s'étendant entre deux portions d'extrémité de forme incurvée convexe, et en ce que les fentes ont des formes complémentaires à ces portions de façon à assurer un contact de la languette dans la fente sur toute l'étendue longitudinale de ces portions.

La présente invention propose ainsi de modifier la forme des languettes ainsi que des fentes de réception de ces languettes. Les inventeurs ont constaté que c'est la réalisation des extrémités à fond plat des languettes de la technique antérieure qui est problématique et génère des défauts de fabrication et une usure accélérée ou une rupture des outils d'usinage. La réalisation des languettes avec des extrémités arrondies et en particulier l'usinage des fentes de réception de ces languettes, sont plus faciles à réaliser. Les languettes ont des formes complémentaires aux fentes. Les portions intermédiaires rectilignes des languettes prennent appui sur des portions complémentaires des fonds des fentes, et les portions d'extrémité incurvées des languettes prennent également appui sur des portions complémentaires des fonds des fentes. Il y a donc un contact continu (et par exemple « linéique » du fait de la faible épaisseur des languettes en général) sur toute l'étendue longitudinale des portions et donc sensiblement sur toute la longueur de la languette.

L'assemblage selon l'invention peut comprendre une ou plusieurs des caractéristiques suivantes, prises isolément les unes des autres, ou en combinaison les unes avec les autres :
- les portions d'extrémité ont chacune une forme en portion de cercle ou d'ellipse ;
- au niveau de chacune des extrémités longitudinales de chaque languette, la portion d'extrémité du premier bord rejoint la portion d'extrémité du second bord de façon à ce qu'elles s'étendent dans la continuité l'une de l'autre ;
- la portion intermédiaire a une étendue longitudinale qui représente entre 70 et 90% de l'étendue longitudinale de la languette correspondante ;
- chaque portion d'extrémité a une étendue longitudinale qui représente entre 5 et 15% de l'étendue longitudinale de la languette correspondante ;
- l'assemblage forme un distributeur de turbine, les secteurs étant des secteurs de distributeur comportant chacun deux plateformes entre lesquelles s'étend au moins une pale ;
- l'assemblage forme un anneau d'étanchéité pour un compresseur ou une turbine ;
   -- ledit contact a principalement lieu dans une direction circonférentielle par rapport audit axe.

L'invention concerne en outre une turbomachine d'aéronef, comportant au moins un assemblage tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig. 1] la figure 1 est une demi vue schématique en coupe axiale d'une turbomachine d'aéronef ;
[Fig. 2] la figure 2 est une demi vue schématique en coupe axiale d'un étage de turbine d'une turbomachine d'aéronef ;
[Fig. 3] la figure 3 est une vue en perspective d'un assemblage au sens de l'invention, qui est ici un distributeur de turbine ;
[Fig. 4] la figure 4 est une vue en perspective de deux secteurs adjacents de l'assemblage de la figure 3 ;
[Fig. 5] la figure 5 est une vue en perspective d'un secteur d'un autre assemblage au sens de l'invention, qui est ici un anneau d'étanchéité ; [Fig. 6] la figure 6 est une vue schématique en perspective d'une languette d'étanchéité ;
[Fig. 7] la figure 7 est une vue schématique de la languette d'étanchéité de la figure 6 disposée entre deux secteurs comportant des fentes de montage de cette languette ;
[Fig. 8] la figure 8 est une vue schématique d'une languette d'étanchéité disposée entre deux secteurs comportant des fentes de montage de cette languette, et illustre un mode de réalisation de la présente invention.

### Description détaillée de l'invention

Les figures 1 à 7 ont été décrites dans ce qui précède.

Bien que ces figures aient été décrites dans le cadre de la technique actuelle et pour poser le problème technique résolu par la présente invention, elles illustrent le contexte général de l'invention et la description de ces figures peut donc être utilisée pour décrire le contexte général de l'invention et certaines caractéristiques de cette invention.

L'invention concerne ainsi un assemblage tel que décrit dans ce qui précède, c'est-à-dire notamment un distributeur 22' ou un anneau d'étanchéité 34. L'assemblage a une forme générale annulaire autour d'un axe X, qui est l'axe longitudinal de la turbomachine lorsque l'assemblage est monté dans une turbomachine 10 telle que celle illustrée à la figure 1.

L'assemblage comporte plusieurs secteurs disposés circonférentiellement les uns à côté des autres autour de l'axe X, comme présenté à la figure 3. Ces secteurs sont réalisés en matériau composite à matrice céramique (CMC) et comportent chacun des bords latéraux 35 qui sont situés en regard de bords latéraux 35 de secteurs adjacents.

L'assemblage comporte en outre plusieurs languettes d'étanchéité 44' qui sont réparties autour de l'axe X et montées entre les secteurs (cf. figure 8). Chacune de ces languettes 44' a une forme générale allongée et comporte un premier bord longitudinal 44a engagé dans une fente 42 d'un bord latéral 35 d'un des secteurs, et un second bord longitudinal 44b, opposé au premier bord 44a, et engagé dans une fente 42 d'un bord latéral 35 en regard d'un secteur adjacent.

Selon l'invention dont un mode de réalisation est illustré à la figure 8, les premiers et seconds bords 44a, 44b de chacune des languettes 44' comprennent chacun une portion intermédiaire 50 rectiligne s'étendant entre deux portions d'extrémité 52 de forme incurvée convexe. Les fentes 42 ont des formes complémentaires à ces portions 50, 52 de façon à assurer un contact, par exemple linéique, de la languette 44' dans la fente 42 sur toute l'étendue longitudinale de ces portions 50, 52. Le fond 42a de chacune des fentes 42 comprend ainsi une portion intermédiaire 54 rectiligne s'étendant entre deux portions d'extrémité 56 de forme incurvée concave.

Les portions d'extrémité 52 et 56 ont de préférence chacune une forme en portion de cercle ou d'ellipse, comme illustré dans le dessin. Par ailleurs, comme illustré également, au niveau de chacune des extrémités longitudinales de chaque languette 44, la portion d'extrémité 52 du premier bord 44a rejoint la portion d'extrémité 52 du second bord 44b de façon à ce qu'elles s'étendent dans la continuité l'une de l'autre.

La portion intermédiaire 50 a de préférence une étendue longitudinale qui représente entre 70 et 90% de l'étendue longitudinale de la languette 44' correspondante. Les portions intermédiaires 50 de chaque languette 44' sont de préférence parallèles entre elles.

Chaque portion d'extrémité 52 a de préférence une étendue longitudinale qui représente entre 5 et 15% de l'étendue longitudinale de la languette 44' correspondante.

Dans un mode particulier de réalisation de l'invention, chacune des languettes 44' a une longueur comprise entre 20 et 100mm, et de préférence entre 30 et 60mm. Chacune des languettes 44' a une largeur comprise entre 2 et 10mm, et de préférence entre 3 et 6mm. Chacune des languettes 44' a une épaisseur comprise entre 1 et 5mm.

## Revendications

1. Assemblage pour une turbomachine (10) d'aéronef, cet assemblage ayant une forme générale annulaire autour d'un axe (X) et comportant plusieurs secteurs disposés circonférentiellement les uns à côté des autres autour de l'axe (X), ces secteurs étant réalisés en matériau composite à matrice céramique et comportant chacun des bords latéraux (35) qui sont situés en regard de bords latéraux de secteurs adjacents, l'assemblage comportant en outre plusieurs languettes d'étanchéité (44') qui sont réparties autour de l'axe (X) et montées entre les secteurs, chacune de ces languettes (44') ayant une forme générale allongée et comportant un premier bord longitudinal (44a) engagé dans une fente (42) d'un bord latéral (35) d'un des secteurs, et un second bord longitudinal (44b), opposé au premier bord (44a), et engagé dans une fente (44) d'un bord latéral (35) en regard d'un secteur adjacent, **caractérisé en ce que** chacun des premiers et seconds bords (44a, 44b) comprend une portion intermédiaire rectiligne (50) s'étendant entre deux portions d'extrémité (52) de forme incurvée convexe, et **en ce que** les fentes (52) ont des formes complémentaires à ces portions (50, 52) de façon à assurer un contact de la languette (55') dans la fente (42) sur toute l'étendue longitudinale de ces portions (50, 52).

2. Assemblage selon la revendication 1, dans lequel les portions d'extrémité (52) ont chacune une forme en portion de cercle ou d'ellipse.

3. Assemblage selon la revendication 1 ou 2, dans lequel, au niveau de chacune des extrémités longitudinales de chaque languette (44'), la portion d'extrémité (52) du premier bord (44a) rejoint la portion d'extrémité (52) du second bord (44b) de façon à ce qu'elles s'étendent dans la continuité l'une de l'autre.

4. Assemblage selon l'une des revendications précédentes, dans lequel la portion intermédiaire (50) a une étendue longitudinale qui représente entre 70 et 90% de l'étendue longitudinale de la languette (44') correspondante.

5. Assemblage selon l'une des revendications précédentes, dans lequel chaque portion d'extrémité (52) a une étendue longitudinale qui représente entre 5 et 15% de l'étendue longitudinale de la languette (44') correspondante.

6. Assemblage selon l'une des revendications précédentes, dans lequel il forme un distributeur (22') de turbine, les secteurs étant des secteurs de distributeur comportant chacun deux plateformes (28) entre lesquelles s'étend au moins une pale (26).

7. Assemblage selon l'une des revendications 1 à 5, dans lequel il forme un anneau d'étanchéité (34) pour un compresseur (14) ou une turbine (18).

8. Turbomachine (10) d'aéronef, comportant au moins un assemblage selon l'une des revendications précédentes.

## Patentansprüche

1. Anordnung für ein Turbotriebwerk (10) eines Luftfahrzeugs, wobei diese Anordnung eine allgemein ringförmige Form um eine Achse (X) aufweist und mehrere Sektoren umfasst, die in Umfangsrichtung nebeneinander um die Achse (X) angeordnet sind, wobei diese Sektoren aus Verbundmaterial mit Keramikmatrix hergestellt sind und jeweils Seitenkanten (35) umfassen, die Seitenkanten angrenzender Sektoren gegenüberliegen, wobei die Anordnung weiter mehrere Dichtungslaschen (44') umfasst, die um die Achse (X) verteilt und zwischen den Sektoren angebracht sind, wobei jede dieser Laschen (44') eine allgemein längliche Form aufweist und eine erste Längskante (44a), die in einen Schlitz (42) einer Seitenkante (35) eines der Sektoren eingreift, und eine zweite Längskante (44b) umfasst, die der ersten Kante (44a) gegenüberliegt und in einen Schlitz (44) einer gegenüberliegenden Seitenkante (35) eines angrenzenden Sektors eingreift, **dadurch gekennzeichnet, dass** jede der ersten und der zweiten Kante (44a, 44b) einen geraden Zwischenabschnitt (50) umfasst, der sich zwischen zwei Endabschnitten (52) von konvex gekrümmter Form erstreckt, und dass die Schlitze (52) Formen aufweisen, die zu diesen Abschnitten (50, 52) komplementär sind, um einen Kontakt der Lasche (55') im Schlitz (42) über die gesamte Längserstreckung dieser Abschnitte (50, 52) sicherzustellen.

2. Anordnung nach Anspruch 1, wobei die Endabschnitte (52) jeweils die Form eines Kreis- oder Ellipsenabschnitts aufweisen.

3. Anordnung nach Anspruch 1 oder 2, wobei an jedem der Längsenden jeder Lasche (44') der Endabschnitt (52) der ersten Kante (44a) in den Endabschnitt (52) der zweiten Kante (44b) übergeht, sodass diese sich in gegenseitiger Fortsetzung erstrecken.

4. Anordnung nach einem der vorstehenden Ansprüche, wobei der Zwischenabschnitt (50) eine Längserstreckung aufweist, die zwischen 70 und 90 % der Längserstreckung der entsprechenden Lasche (44') beträgt.

5. Anordnung nach einem der vorstehenden Ansprüche, wobei jeder Endabschnitt (52) eine Längserstreckung aufweist, die zwischen 5 und 15 % der Längserstreckung der entsprechenden Lasche (44') beträgt.

6. Anordnung nach einem der vorstehenden Ansprüche, wobei diese einen Turbinenverteiler (22') bildet, wobei die Sektoren Verteilersektoren sind, die jeweils zwei Plattformen (28) umfassen, zwischen denen sich mindestens eine Schaufel (26) erstreckt.

7. Anordnung nach einem der Ansprüche 1 bis 5, wobei diese einen Dichtungsring (34) für einen Kompressor (14) oder eine Turbine (18) bildet.

8. Turbotriebwerk (10) für ein Luftfahrzeug, das mindestens eine Anordnung nach einem der vorstehenden Ansprüche umfasst.

## Claims

1. An assembly for an aircraft turbomachine (10), the assembly having a generally annular shape around an axis (X) and comprising several sectors disposed circumferentially side-by-side around the axis (X), these sectors being made of a ceramic matrix composite material and each comprising lateral edges (35) that face lateral edges of adjacent sectors, the assembly further comprising several sealing tongues (44') which are distributed around the axis (X) and mounted between the sectors, each of the tongues (44') having a generally elongate shape and comprising a first longitudinal edge (44a) engaged in a slot (42) in a lateral edge (35) of one of the sectors, and a second longitudinal edge (44b), opposite the first edge (44a), and engaged in a slot (44) in a lateral edge (35) facing an adjacent sector, **characterised in that** each of the first and second edges (44a, 44b) comprises a rectilinear intermediate portion (50) extending between two end portions (52) of convexly curved shape, and **in that** the slots (52) have shapes complementary to these portions (50, 52) so as to ensure contact of the tongue (55') in the slot (42) over the entire longitudinal extent of these portions (50, 52).

2. The assembly as claimed in claim 1, wherein the end portions (52) each have the shape of a portion of a circle or ellipse.

3. The assembly according to claim 1 or 2, wherein, at each of the longitudinal ends of each tongue (44'), the end portion (52) of the first edge (44a) joins the end portion (52) of the second edge (44b) so that they extend continuously with each other.

4. The assembly according to any one of the preceding claims, wherein the intermediate portion (50) has a longitudinal extent which represents between 70 and 90% of the longitudinal extent of the corresponding tongue (44').

5. The assembly according to any one of the preceding claims, wherein each end portion (52) has a longitudinal extent which represents between 5 and 15% of the longitudinal extent of the corresponding tongue (44').

6. The assembly according to one of the preceding claims, wherein it forms a turbine stator vane (22') of the turbine, the sectors being sectors of the turbine stator vane each comprising two platforms (28) between which at least one blade (26) extends.

7. The assembly according to any one of claims 1 to 5, wherein it forms a sealing ring (34) for a compressor (14) or a turbine (18).

8. An aircraft turbomachine (10) comprising at least one assembly according to one of the preceding claims.
